(19) **Europäisches Patentamt**
**European Patent Office**
**Office européen des brevets**

(11) **EP 4 482 228 A1**

(12) **EUROPEAN PATENT APPLICATION**
published in accordance with Art. 153(4) EPC

(43) Date of publication:
**25.12.2024   Bulletin 2024/52**

(21) Application number: **23753234.6**

(22) Date of filing: **13.02.2023**

(51) International Patent Classification (IPC):
**H04W 52/36** (2009.01)

(52) Cooperative Patent Classification (CPC):
**H04W 52/365; H04W 52/146; H04W 52/36**

(86) International application number:
**PCT/KR2023/002044**

(87) International publication number:
**WO 2023/153888 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.02.2022   US 202263310050 P**

(71) Applicant: **LG Electronics Inc.**
**Yeongdeungpo-gu**
**Seoul 07336 (KR)**

(72) Inventors:
• **CHUNG, Jaehoon**
  **Seoul 06772 (KR)**
• **KANG, Jiwon**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR TRANSMITTING OR RECEIVING POWER HEADROOM INFORMATION IN WIRELESS COMMUNICATION SYSTEM**

(57)    Disclosed are a method and apparatus for transmitting or receiving power headroom information in wireless communication system. The method performed by a terminal in the wireless communication system, according to an embodiment of the present disclosure, comprises the steps of: transmitting, to a network, information about a plurality of capability information sets related to uplink transmission of the terminal; and transmitting, to the network, power headroom report (PHR) information including information indicating a specific one from among the plurality of capability information sets, wherein the PHR information may include a plurality of maximum power parameters respectively corresponding to the plurality of capability information sets.

FIG.8

EP 4 482 228 A1

## Description

[Technical Field]

The present disclosure relates to a wireless communication system, and more particularly, to a method and an apparatus for transmitting or receiving power headroom information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and an apparatus for transmitting or receiving power headroom information for a specific capability information set among a plurality of terminal capability information sets in a wireless communication system.

An additional technical problem of the present disclosure is to provide a method and an apparatus for transmitting or receiving power headroom information related to a specific maximum power parameter among a plurality of maximum power parameters in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed by a terminal in a wireless communication system according to an embodiment of the present disclosure includes transmitting to a network information on a plurality of capability information sets related to uplink transmission of the terminal; and transmitting to the network power headroom report (PHR) information including information indicating specific one of the plurality of capability information sets, and the PHR information may include a plurality of maximum power parameters corresponding to the plurality of capability information sets, respectively.

A method performed by a base station in a wireless communication system according to an additional embodiment of the present disclosure includes receiving from the terminal information on a plurality of capability information sets related to uplink transmission of a terminal; receiving from the terminal power headroom report (PHR) information including information indicating specific one of the plurality of capability information sets; and performing uplink scheduling for the terminal based on the PHR information, and the PHR information may include a plurality of maximum power parameters corresponding to the plurality of capability information sets, respectively.

[Technical Effects]

According to an embodiment of the present disclosure, a method and an apparatus for transmitting or receiving power headroom information for a specific capability information set among a plurality of terminal capability information sets in a wireless communication system may be provided.

According to an embodiment of the present disclosure, a method and an apparatus for transmitting or receiving power headroom information related to a specific maximum power parameter among a plurality of maximum power parameters in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing exemplary formats of a PHR MAC CE related to the present disclosure.
FIG. 8 is a diagram for describing an example of a PHR information transmission method of a terminal according to the present disclosure.
FIG. 9 is a diagram for describing an example of a PHR information reception method of a base station according to the present disclosure.
FIG. 10 is a diagram representing exemplary formats of a PHR MAC CE including a panel-specific maximum power parameter according to the present disclosure.

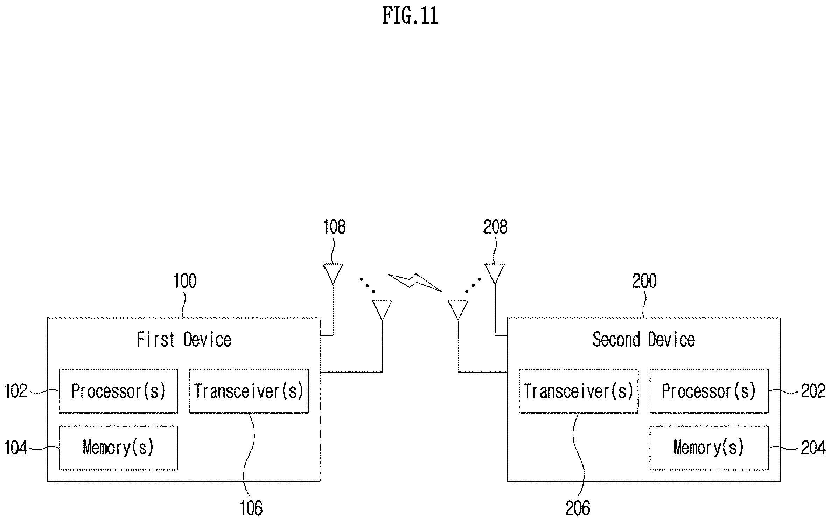

FIG. 11 illustrates a block diagram of a wireless communication system according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel

PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

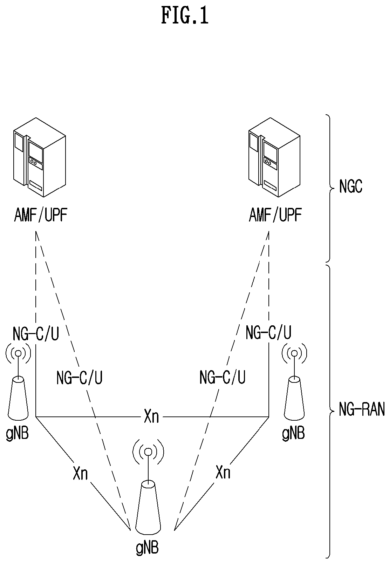

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

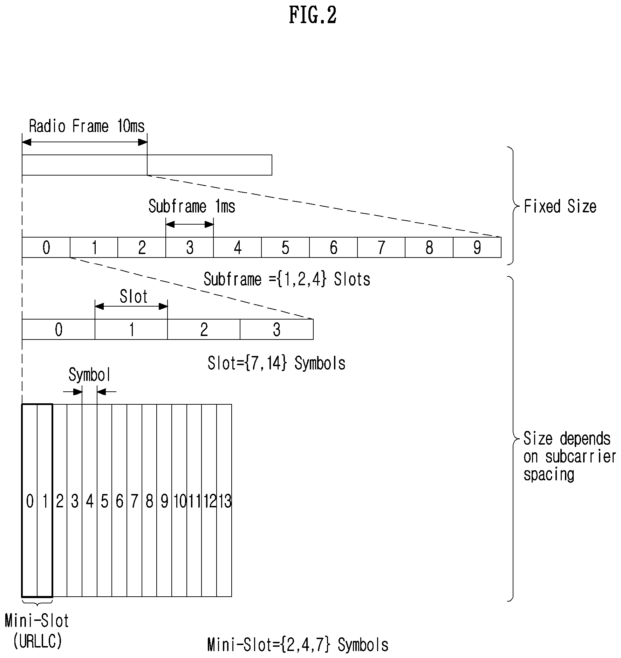

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |

(continued)

| μ | Δf=2^μ·15 [kHz] | CP |
|---|---|---|
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c$=10ms. Here, a radio frame is configured with 10 subframes having a duration of $T_{sf}=(\Delta f_{max}N_f/1000)\cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subfram,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.
Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

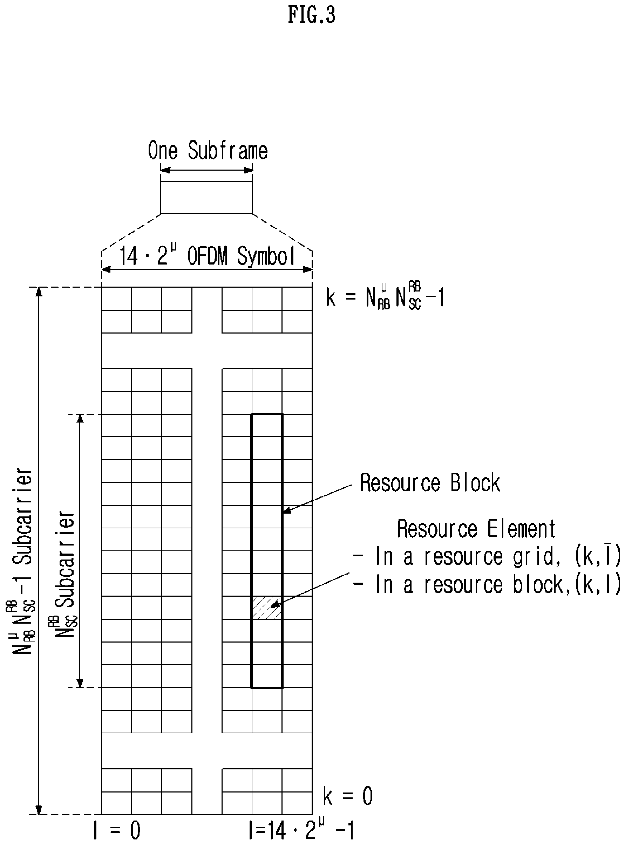

FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

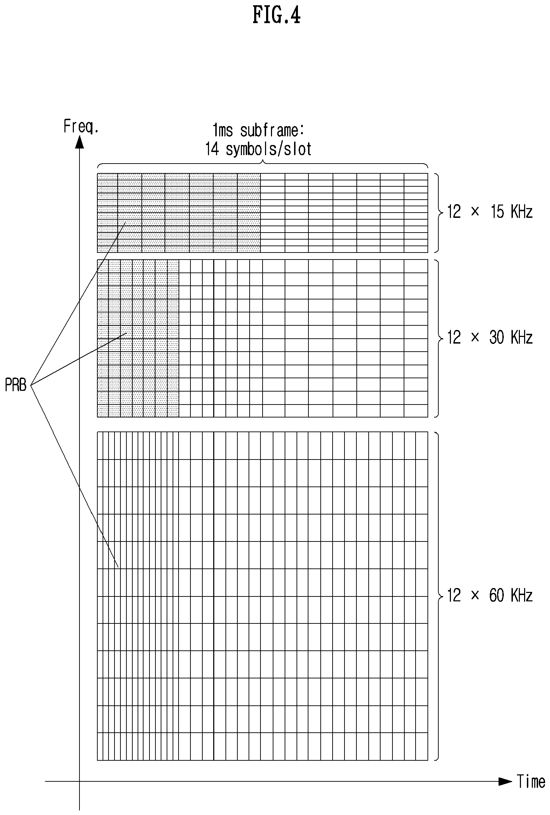

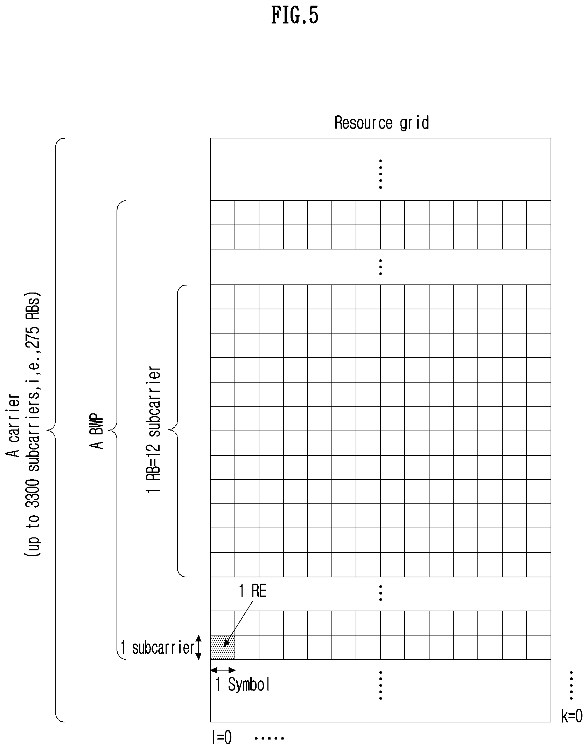

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

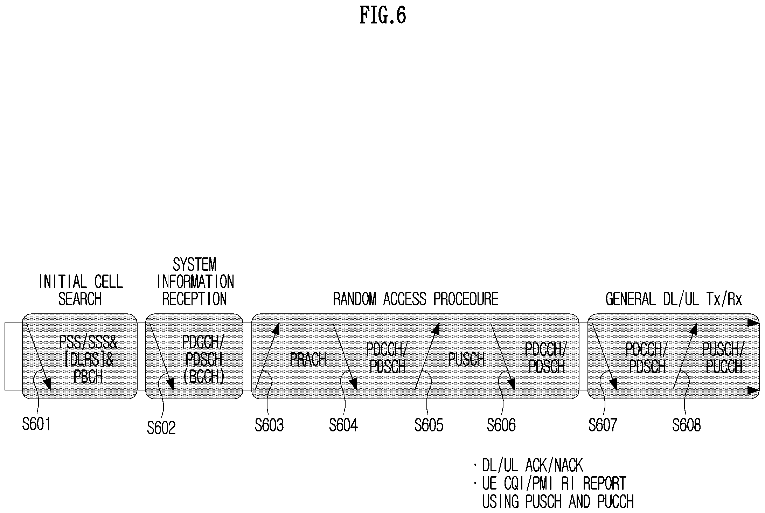

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Power Headroom Report

A power headroom report (PHR) may be performed by a UE to report a difference between a nominal maximum transmit power and an uplink channel/signal transmit power estimated by the UE to a network (or base station). Nominal maximum transmission power, for example, may be represented as a parameter $P_{CMAX,f,c}$ or may correspond to configured terminal transmission or configured terminal maximum output power. An uplink channel may correspond to a PUCCH, a PUSCH, etc. and an uplink signal may correspond to a SRS. A report target of PHR may be an activated serving cell or a SpCell (a PCell or a PSCell (primary secondary cell)) of other MAC entity. Accordingly, various types of PHR may be defined.

For example, type 1 PH may be based on a difference between estimated transmission power of a UL-SCH/a PUSCH and nominal maximum transmission power per activated serving cell. Type 2 PH may be based on a difference between estimated transmission power of a PUCCH and a UL-SCH/a PUSCH transmitted on a SpCell of other MAC entity and nominal maximum transmission power on a corresponding SpCell. Type 3 PH may be based on a difference between nominal maximum transmission power per activated serving cell and estimated transmission power of a SRS.

A terminal may receive configuration information on PHR-related parameters through higher layer signaling (e.g., a RRC message including a PHR-Config information element) from a network. PHR-Config may include parameters indicating a PHR periodic timer, a PHR prohibition timer, a PHR transmission power factor change standard, whether report is performed through a single entry PHR MAC CE or through a multi-entry PHR MAC CE, other cell of type 2 PHR (i.e., a cell corresponding to other MAC entity described above), whether it is in a real mode or in a virtual mode, etc. Virtual PHR may correspond to various types of PHR determined based on reference transmission.

In addition, PHR may be triggered based on an event. For example, an event may correspond to PHR prohibition timer expiration, path loss equal to or greater than a PHR transmission power factor change standard, PHR periodic timer expiration, PHR configuration or recongiruation, SCell activation related to a configured uplink, PSCell addition, etc.

If an uplink transmission resource for new transmission is allocated to a MAC entity of a terminal, a terminal may transmit a MAC CE including $P_{CMAX}$ and/or PHR in at least one type of various types.

As such, a terminal may use information configured from a base station to deliver value(s) for type 1/2/3 PHR (e.g., power headroom(s) and/or $P_{CMAX}$(s)) to a MAC layer in a physical layer of a terminal. A MAC layer may deliver/report value(s) received/delivered from a physical layer to a base station through a MAC-CE (e.g., a single entry PHR MAC CE format or a multi-entry PHR MAC CE format).

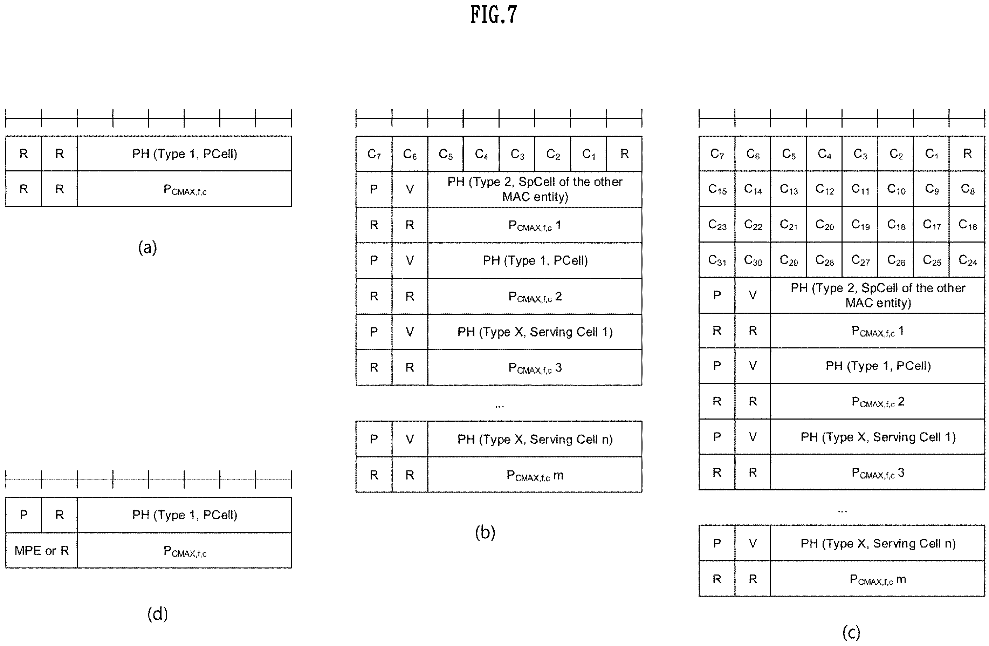

When value(s) related to PHR mentioned in the present disclosure (e.g., value(s) related to all PHR including a PH, a virtual PH, $P_{CMAX}$ and a modification thereof) are transmitted/delivered/reported (through a MAC CE), corresponding values may be interpreted as being transmitted/delivered/reported by being leveled with N bits (e.g., N=6) as described below. In other words, a MAC-CE related to PHR described in the present disclosure may be configured by referring to an example of FIG. 7.

FIG. 7 is a diagram for describing exemplary formats of a PHR MAC CE related to the present disclosure.

FIG. 7(a) corresponds to a single entry PHR MAC CE. A single entry PHR MAC CE may have a fixed size of 2 octets.

R corresponds to a bit which is reserved (or set as 0).

A PH field indicates a power headroom level and a length of a corresponding field is 6 bits. A power headroom level corresponding to a reported PH value may be predefined. For example, 0 to 63, a value of a PH field, may correspond to 0 to 63, a power headroom level, respectively.

A $P_{CMAX,f,c}$ field represents a value of $P_{CMAX}$ used for calculating a PH field. In $P_{CMAX,f,c}$, f corresponds to a carrier and c corresponds to a serving cell index. A value of a $P_{CMAX,f,c}$ field and a nominal terminal power level corresponding thereto may be predefined. For example, 0 to 63, a value of a $P_{CMAX,f,c}$ field, may correspond to PCMAX_C_0 to PCMAX_C_63, respectively.

FIG. 7(b) represents an exemplary format of a multi-entry PHR MAC CE when the highest serving cell index of a configured uplink is less than 8. FIG. 7(c) represents an exemplary format of a multi-entry PHR MAC CE when the highest serving cell index of a configured uplink is equal to or greater than 8. A multi-entry PHR MAC CE may have a variable size.

When the highest serving cell index is less than 8, a 1-octet-sized bitmap (R, $C_1$-$C_7$ in FIG. 7(b)) representing whether a PH field exists per serving cell may be included and when the highest serving cell index is equal to or greater than 8, a 4-octet-sized bitmap (R, $C_1$-$C_{31}$ in FIG. 7(c)) representing whether a PH field exists per serving cell may be included.

R corresponds to a bit which is reserved (or set as 0).

A V field may represent whether a PH value corresponds to a real mode or a virtual mode. In addition, a V field may represent whether an octet including an associated $P_{CMAX,f,c}$ field exists.

A PH field indicates a power headroom level and a length of a corresponding field is 6 bits. A power headroom level corresponding to a reported PH value may be predefined. For example, 0 to 63, a value of a PH field, may correspond to 0 to 63, a power headroom level, respectively. Multiple PH fields of a multi-entry PHR MAC CE may have a different type.

A P field may represent whether a MAC entity applies power backoff due to power management.

A $P_{CMAX,f,c}$ field represents a value of $P_{CMAX}$ used for calculating a PH field. In $P_{CMAX,f,c}$, f corresponds to a carrier and c corresponds to a serving cell index. A value of a $P_{CMAX,f,c}$ field and a nominal terminal power level corresponding thereto may be predefined. For example, 0 to 63, a value of a $P_{CMAX,f,c}$ field, may correspond to PCMAX_C_0 to PCMAX_C_63, respectively.

Multi-panel Operation

A term 'panel' used in the present disclosure may correspond to a group of elements having a similarity or a common value in terms of a specific characteristic related to a terminal operation (e.g., timing advance (TA), synchronization, a power control parameter, etc.). For example, a panel may be replaced by a term including a group of antenna elements, a physical/logical antenna (port) group, a group of uplink resources, a beam group, a group in a transmission beam configuration unit, a group in a reception beam configuration unit, a group of uplink synchronization units (USU), a group of uplink transmission entities (UTE), etc. A group may correspond to a set including at least one member. For example, a panel may be replaced by a term including a group of antenna elements, a group of antenna ports, a group of logical antennas, a group of uplink resources, a beam group, a group in a transmission beam configuration unit, a group in a reception beam configuration unit, a USU group, a UTE group, etc. having a similarity or a common value in terms of a specific characteristic related to a terminal operation.

For example, a transmission beam configuration unit may correspond to a unit configuring one beam generated at a specific occasion among a plurality of candidate transmission beams which may be generated in one panel. In other words, one transmission beam (e.g., a spatial relation RS) may be used per transmission panel to transmit a specific uplink signal/channel.

For example, an uplink resource group and a PUSCH/PUCCH/SRS/PRACH resource (or a resource group (or set)) may be replaced with each other.

As such, in the present disclosure, it is described by using a term 'panel' for clarity, but a scope of the present disclosure may include examples to which a variety of alternative terms as above are applied. In addition, a group of members corresponding to one panel (e.g., antenna)(s) may be configured based on a location/a distance/a correlation of members, a RF configuration, an antenna (port) virtualization method, etc. Which member(s) are included in one group, i.e., a panel may vary depending on terminal implementation.

A term 'panel group' used in the present disclosure may correspond to a unit including at least one panel. In addition, a panel group may correspond to a capability information set of a terminal. In other words, a different panel group may correspond to a different terminal capability information set. In the following description, 'panel' may be replaced with 'panel group'.

Hereinafter, a terminal having a plurality of panels is described, and the same example may be applied to a base station (or a TRP) having a plurality of panels.

A plurality of panels of a terminal may operate based on a RF switch. For example, only one panel is activated in one time duration and signal transmission may be impossible for a predetermined time in order to change (or switch) an activation panel.

Alternatively, all of a plurality of panels of a terminal may be connected to a modem through a RF chain. Each of a plurality of panels may be activated simultaneously or individually at any occasion. In this case, a time taken for panel switching may be very small or 0 and according to a modem and power amplifier configuration, a plurality of panels may be simultaneously activated and an operation of simultaneous signal transmission (simultaneous transmission across multi-panel, STxMP) may be also supported.

A wireless channel state may be different per panel. In addition, a RF configuration and/or an antenna configuration may be different per panel. Accordingly, a method of estimating a channel per panel is required. For example, in order to measure uplink quality or manage an uplink beam, or in order to measure downlink quality or manage a downlink beam per panel by utilizing channel reciprocity, a process of transmitting one or a plurality of SRS resources per panel is required. Here, a plurality of SRS resources may be SRS resources transmitted to a different beam in one panel or may be SRS resources repeatedly transmitted to the same beam. Hereinafter, for convenience, a set of SRS resources according to a parameter for a specific use (e.g., beam management, antenna switching, a codebook-based PUSCH, a non-codebook-based PUSCH) and a specific time domain operation (e.g., aperiodic, semi-persistent, or periodic) in the same panel may be referred to as a SRS resource group. A SRS resource group may be the same as the existing SRS resource set and may be defined to include at least one SRS resource having the same time domain operation and/or use. For example, by granting a group ID to each SRS resource, resources having the same ID may be configured to belong to the same SRS resource group and resources having a different group ID may be configured to belong to a different SRS resource group.

For example, a terminal having four panels may transmit each panel by making it correspond to a SRS resource set for one beam management (BM). The number of SRS resources which may be configured per each SRS resource set may be signaled from a terminal to a network (or a base station) as terminal capability information. For example, when two SRS resources are configured in each SRS resource set, it may correspond to a case in which the number of UL beams which may be transmitted per each panel is 2. In other words, a terminal may transmit two UL beams by making them correspond to two configured SRS resources respectively in each of four panels. In this case, unlike only one SRS resource set being configured/indicated for the existing PUSCH scheduling, a plurality of SRS resource sets may be configured/indicated.

A terminal having a plurality of panels may be classified into is a first category that a plurality of panels may not be activated simultaneously (i.e., only one panel may be activated), a second category that a plurality of panels may be activated simultaneously, but transmission may be performed only in one panel and a third category that a plurality of panels may be activated simultaneously and transmission may be performed simultaneously through a plurality of panels. A terminal may support at least one category, and it may report at least one capability information set to a network according to a corresponding category. In addition, a multi-panel-related terminal category may be predefined, semi-statically configured or dynamically indicated.

In the present disclosure, when any information is defined between a terminal and a base station, it may mean that a terminal and a base station know corresponding information without separate signaling between a terminal and a base station; when it is configured between a terminal and a base station, it may mean that corresponding information is transmitted/received through higher layer (e.g., RRC) signaling between a terminal and a base station; and when it is indicated between a terminal and a base station, it may mean that corresponding information is transmitted/received through lower layer (e.g., L1 (e.g., DCI/UCI), L2 (e.g., a MAC-CE)) signaling.

Panel-specific transmission/reception may be also referred to as panel-selective transmission/reception and identification information may be used to indicate a panel used for transmission/reception. Identification information related to a panel may be used for panel-selective transmission of a PUSCH, a PUCCH, a SRS, and/or a PRACH. For example, for identification information related to a panel, a SRS resource set ID, a reference RS resource ID, a reference RS resource set ID, a target RS resource ID, a target RS resource set ID, an ID related to spatial relation information, a UL TCI (e.g., a reference RS resource (e.g., a SRS resource, a CSI-RS resource, a SSB) list), etc. may be used.

Information related to panel-specific transmission/reception (e.g., panel-related identification information) may be delivered by higher layer signaling (e.g., a RRC message, a MAC-CE, etc.) and/or lower layer signaling (e.g., L1 signaling, DCI, etc.). Corresponding information may be delivered from a base station to a terminal or may be delivered from a terminal to a base station according to a situation or if necessary.

In addition, information related to panel-specific transmission/reception may be delivered in a hierarchical way of configuring a set for candidates and indicating (at least one) specific candidate of them.

In addition, panel-related identification information may be configured in a unit of a single panel or may be configured in a unit of multiple panels (e.g., a panel group, a panel set).

MPE-based Terminal Transmission

Hereinafter, examples of the present disclosure for terminal transmission considering Maximum Permissible Exposure (MPE) are described. The following examples may correspond to a method for efficiently applying MPE-based terminal transmission to a terminal having a plurality of panels.

Regarding analog beam utilization in a high frequency range (e.g., FR2), it is necessary to consider a MPE limitation which may harm the human body. For a case in which a transmission beam of a terminal violates a corresponding MPE limitation, direct power may be backed off in a P-MPR (Power management-Maximum Power Reduction) method or density of uplink transmission may be reduced by defining the maximum uplink duty cycle (maxUplinkDutyCycle) and limiting a rate of a resource used as an uplink in a time domain.

Regarding a P-MPR method, as in an example of FIG. 7(d), MPE information may be additionally defined in a PHR MAC CE format.

For example, when a MPE report-related parameter (e.g., mpe-Reporting-FR2) is configured and a serving cell operates on FR2, in order to satisfy a MPE requirement, a P field may be set as a value of 0 when an applied P-MPR value is less than a predetermined threshold (e.g., P-MPR_00). Otherwise (e.g., when an applied P-MPR value is equal to or greater than a predetermined threshold), a P field may be set as a value of 1.

When a MPE report-related parameter (e.g., mpe-Reporting-FR2) is not configured or when a serving cell operates on FR1, a P field may indicate whether power backoff due to power management (allowed by a P-MPRc parameter) is applied. When power backoff due to power management is not applied, a P field may be set as a value of 1 if a corresponding PCMAX,f,c field has a different value.

When a MPE report-related parameter (e.g., mpe-Reporting-FR2) is configured, a serving cell operates on FR2 and a value of a P field is set as 1, a MPE field may indicate a power backoff value applied to satisfy a MPE requirement. A value of an index indicated by a MPE field and a P-MPR level (dB unit) corresponding to it may be predefined. A length of a MPE field is 2 bits.

When a MPE report-related parameter (e.g., mpe-Reporting-FR2) is not configured or when a serving cell operates on FR1 or when a value of a P field is set as 0, R bits exist instead of a MPE field.

A description about other fields of FIG. 7(d) is the same as described in an example of FIG. 7(a).

In addition, contents about a P field and a MPE field described in FIG. 7(d) may be equally applied to a multi-entry PHR MAC CE of FIGS. 7(b) and (c).

Next, in relation to a unified TCI, the following information may be additionally included in a PHR MAC CE for P-MPR based MPE mitigation.

For example, at least one (e.g., up to four) P-MPR value (or MPE_i, i=1,2,3,4 field) may be reported through a PHR MAC CE. It may be additionally included in a MPE field shown in FIG. 7(d). A terminal may report the maximum number of P-MPR values which may be reported to a network as capability information.

For each P-MPR value (i.e., corresponding to a MPE_i field), at least one SSB/CSI-RS resource(s) may be reported. SSB resource indicator(SSBRI)/CRI(s) may be used to indicate SSB/CSI-RS resource(s). SSBRI/CRI(s) may be selected by a terminal within a predetermined candidate SSB/CSI-RS resource pool (e.g., mpe-ResourcePool configured by higher layer (e.g., RRC) signaling).

As such, a terminal may report a single P-MPR value related to a single $P_{CMAX}$ value of a terminal to a network through a PHR MAC CE for MPE mitigation and additionally, it may also report N P-MPR values corresponding to at least one (i.e., N) SSBRI/CRI respectively to a network through a PHR MAC CE.

At least one reported P-MPR value may be applied to at least one panel of a terminal. In other words, at least one SSBRI/CRI may be associated with at least one panel, respectively.

In addition, in order to support capability reporting and terminal-initiated panel selection/activation for a plurality of panels of a terminal, at least one terminal capability information set (or terminal capability value set) may be defined.

For example, a terminal may report a list of terminal capability information set(s) to a network. Each terminal capability information set may have a specific index (e.g., a C-ID). Accordingly, in the following description, a terminal capability information set may be replaced by a specific index.

Each terminal capability information set may include the maximum number of supported SRS ports. For a different capability information set, at least one capability information is different. For a different capability information set, the same capability information may be included.

Through reporting of a list of terminal capability information sets, in supporting terminal-initiated panel activation and selection, a correspondence relationship between each reported CSI-RS and/or SSB resource index and a terminal capability information set in a reported list may be determined by a terminal and may be informed to a network through a beam report instance.

A specific index of a corresponding terminal capability information set may be reported through beam report UCI together with a SSBRI/CRI and L1-RSRP/SINR pair. For example, a terminal may report one specific index for all reported CRIs/SSBRIs in one beam report. Alternatively, a terminal may report one specific index for each reported CRI/SSBRI in one beam report. For such report of a terminal, a network may provide a terminal with acknowledgement (ack).

Since a MPE mitigation method through a P-MPR as described above considers only the maximum transmission power of a terminal, it is impossible to solve a problem that uplink transmission power affecting the human body may vary depending on a panel shape/characteristic. Accordingly, a new method of applying MPE mitigation per panel (or per panel characteristic) is required.

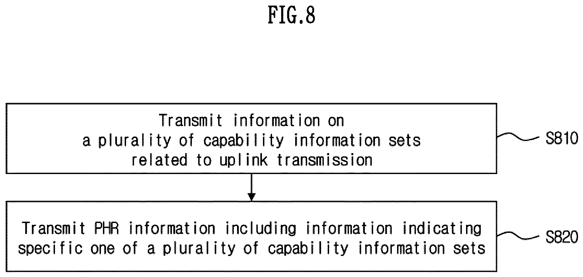

FIG. 8 is a diagram for describing an example of a PHR information transmission method of a terminal according to the present disclosure.

In S810, a terminal may transmit to a network information on a plurality of capability information sets related to uplink transmission.

One capability information set may correspond to one panel or one panel group. As described above, a panel may be replaced by a group of antenna elements, a physical/logical antenna (port) group, a group of uplink resources, a beam group, a group in a transmission beam configuration unit, a group in a reception beam configuration unit, a USU group, a UTE group, etc.

In S820, a terminal may transmit to a network PHR information including information indicating specific one of a plurality of capability information sets.

For example, PHR information (e.g., a PHR MAC CE) may include a plurality of the maximum power parameters (e.g., a $P_{CMAX}$ parameter) corresponding to a plurality of capability information sets, respectively.

A value (e.g., a P-MPR value) of a power backoff indication field (e.g., a MPE field) included in PHR information may be based on the maximum power parameter (e.g., a $P_{CMAX}$ parameter) corresponding to the one specific capability information set.

Information indicating specific one of a plurality of capability information sets may correspond to information indicating one specific maximum power parameter (e.g., a $P_{CMAX}$ parameter) corresponding to the one specific capability information set.

For example, information indicating one specific maximum power parameter may indicate one of the same number of maximum power parameters (e.g., a $P_{CMAX}$ parameter) as the number of resource fields (e.g., CRI/SSBRI fields) of PHR information (or the number of panels (groups), the number of maximum power parameters, or the number of capability information sets).

Alternatively, information indicating one specific maximum power parameter may indicate one of the number of maximum power parameters (e.g., a $P_{CMAX}$ parameter) smaller than the number of resource fields (e.g., CRI/SSBRI fields) of PHR information (or the number of panels, the number of maximum power parameters, or the number of capability information sets). In this case, one maximum power parameter may be associated with a plurality of resource fields. In addition, one maximum power parameter may be associated with a plurality of capability information sets (or a plurality of panels or one panel group).

PHR information may correspond to a single entry PHR MAC CE including one PH field. Alternatively, PHR information may correspond to one entry of a multi-entry PHR MAC CE including a plurality of PH fields. In other words, a plurality of maximum power parameters (e.g., a $P_{CMAX}$ parameter) (or related to one PH field) may exist in one entry of a PHR MAC CE.

PHR information may include a plurality of power backoff indication fields (e.g., a MPE field) corresponding to the number of a plurality of capability information sets. In addition, PHR information may include a plurality of resource fields (e.g., a CRI/SSBRI field) corresponding to the number of a plurality of capability information sets. A plurality of power backoff indication fields may be associated with a plurality of resource fields, respectively.

Additionally or alternatively, PHR information may include one power backoff indication field (e.g., a MPE field) corresponding to one specific capability information set among a plurality of capability information sets (or one specific maximum power parameter among a plurality of maximum power parameters or one specific panel among a plurality of panels). In addition, PHR information may include one resource field (e.g., a CRI/SSBRI field) corresponding to one specific capability information set among a plurality of capability information sets (or one specific maximum power parameter among a plurality of maximum power parameters or one specific panel among a plurality of panels). One power backoff indication field may be associated with one resource field, respectively.

Additionally or alternatively, PHR information may include a plurality of power backoff indication fields (e.g., a MPE field) corresponding to one specific capability information set among a plurality of capability information sets (or one specific maximum power parameter among a plurality of maximum power parameters or one specific panel group among a plurality of panel groups). In addition, PHR information may include a plurality of resource fields (e.g., a CRI/SSBRI field) corresponding to one specific capability information set among a plurality of capability information sets (or one specific maximum power parameter among a plurality of maximum power parameters or one specific panel group among a plurality of panel groups). A plurality of power backoff indication fields may be associated with a plurality of resource fields, respectively.

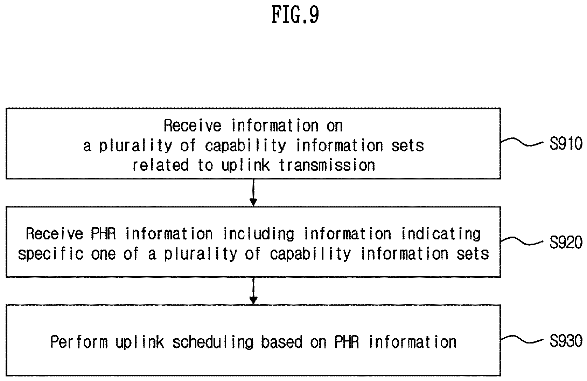

FIG. 9 is a diagram for describing an example of a PHR information reception method of a base station according to the present disclosure.

In S910, a base station may receive from a terminal information on a plurality of capability information sets related to uplink transmission.

In S920, a base station may receive from a terminal PHR information including information indicating specific one of a plurality of capability information sets.

Since a description related to S910 and S920 is the same as described in S810 and S820 in FIG. 8, an overlapping description is omitted.

In S930, a base station may perform uplink scheduling for a corresponding terminal based on PHR information from a terminal. For example, a base station may determine the number of resource blocks to be allocated to a PUSCH, a MCS level to be applied, etc. by considering PHR information.

Hereinafter, specific examples of a MPE-based terminal transmission operation according to the present disclosure are described.

Embodiment 1

This embodiment is about a method that in PHR MAC CE reporting for MPE mitigation, a single PH is reported for a plurality of maximum power parameters (e.g., a $P_{CMAX}$ parameter) and which value among a plurality of maximum power parameters is applied is indicated.

For example, a terminal may report N (e.g., up to 4) MPE fields (e.g., a P-MPR value) and a resource field corresponding thereto (e.g., a CRI/a SSBRI) through a PHR MAC CE.

In the existing method, a P-MPR value is calculated based on one same maximum power parameter (e.g., a $P_{CMAX}$ parameter). Here, a terminal having a plurality of panels may have a different preferred beam (e.g., a CRI/a SSBRI). In addition, a MPE problem does not commonly occur in all panels of a terminal, but it may occur per panel according to a panel characteristic (e.g., a panel shape), a situation where a terminal having a corresponding panel is used, etc. Accordingly, a new method for determining and reporting a P-MPR based on available (or panel-specific) maximum transmission power per panel is required.

In order for MPE mitigation to work effectively in UL transmission in each panel, it is not enought to report a PH value and/or a MPE value corresponding to the existing panel-common single $P_{CMAX}$. According to the present disclosure, a panel-specific maximum power parameter (e.g., a $P_{CMAX}$ parameter) may be reported. In addition, a panel-specific PH or a panel-specific MPE may be reported together with a CRI/a SSBRI by using a panel-specific maximum power parameter (or corresponding thereto).

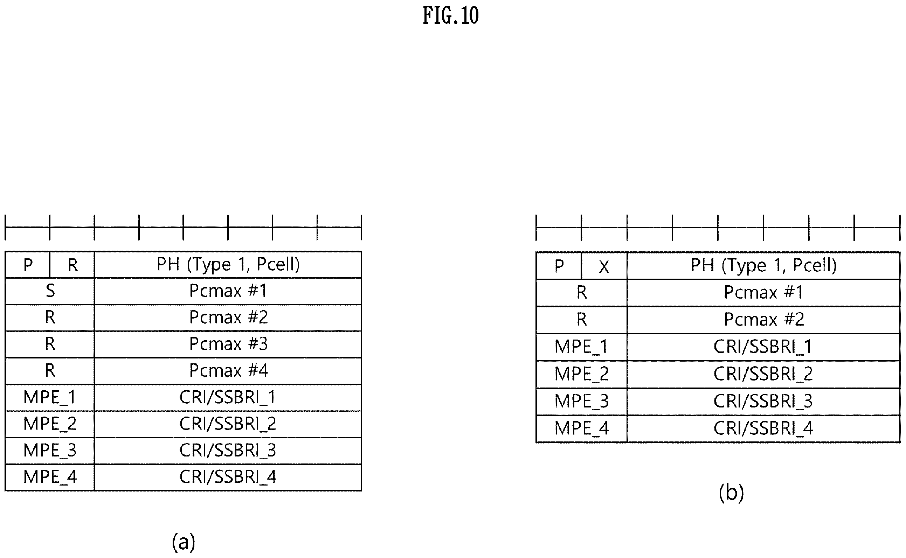

FIG. 10 is a diagram representing exemplary formats of a PHR MAC CE including a panel-specific maximum power parameter according to the present disclosure.

In an example of FIG. 10, it is described by assuming a single entry PHR MAC CE, but the same example may be also applied to a multi-entry PHR MAC CE. In other words, examples of FIG. 10 may be applied to each entry (i.e., one PH field and a set of related fields) of a multi-entry PHR MAC CE.

In an example of FIG. 10(a), it is assumed that a value of N, the number of panels of a terminal (or the number of terminal capability information sets), is 4.

In case of P-MPR-based report with N=4, for a terminal having a panel having four different $P_{CMAX}$, $P_{CMAX}$ for a i-th panel which is the maximum power parameter per each panel may be used to report a PH for a specific i-th panel or a MPE for a specific i-th panel corresponding thereto along with a CRI/a SSBRI. A PHR MAC CE format for it, as in FIG. 10(a), may include the number of $P_{CMAX}$ that a single entry PHR MAC CE is extended as much as the number of panels. Here, which value of $P_{CMAX}$ different per each panel will be applied may be selected by an indicator of a 2-bit S field. A PHR MAC CE may include a P-MPR value (i.e., MPE_i) and a CRI/SSBRI value (i.e., CRI/SSBRI_i) when $P_{CMAX}$ indicated by a S field is applied.

For example, in FIG. 10(a), N individual (or different) maximum power parameters (e.g., $P_{CMAX}$ parameters) may exist in P-MPR based PHR reporting. In other words, N maximum power parameters may be associated with N panels, respectively. In addition, N maximum power parameters may be associated with N capability information sets, respectively.

A S field included in PHR information may indicate which one specific maximum power parameter (or panel or capability information set) of N maximum power parameters (or panel or capability information set) is applied. Accordingly, each of N MPEs (or P-MPR values) included in corresponding PHR information corresponds to a value calculated based on the maximum power parameter indicated by a S field. In addition, each of N CRIs/SSBRIs included in corresponding PHR information may indicate a candidate beam corresponding to a corresponding panel (or capability information set).

Additionally or alternatively, a (one) i-th maximum power parameter among a plurality of maximum power parameters indicated by a S field may indicate a (one) i-th panel (or i-th capability set). In this case, a PHR MAC CE may include (one) MPE for a i-th panel (or a i-th capability set), and one PH for a i-th panel (or a i-th capability set), (one) SSBRI/CRI corresponding to a i-th panel (or a i-th capability set).

Additionally or alternatively, a S field may indicate which of a plurality of capability information sets (or panels) to which each of a plurality of maximum power parameters corresponds. Accordingly, the maximum power parameter is indicated for each of a plurality of capability information sets (or panels), and a MPE per capability information set (or panel) based on it and a corresponding CRI/SSBRI may be included in a PHR MAC CE.

Additionally or alternatively, a plurality of maximum power parameters (e.g., $P_{CMAX}$) included in a PHR MAC CE may be associated with each of a plurality of MPE fields respectively and a plurality of MPE fields may be associated with a plurality of resource fields, respectively. For example, it may be associated with a $P_{CMAX}$ #i field, a MPE_i field, and a CRI/SSBRI_i field (here, i=1, 2, 3, or 4). A S field may indicate which of a plurality of maximum power parameters (e.g., $P_{CMAX}$) is associated with a value of one PH field.

Embodiment 2

In an example of FIG. 10(b), it is assumed that a value of N, the number of panels of a terminal (or the number of terminal capability information sets), is 4. It is assumed that the number of panel groups is G.

In P-MPR-based reporting with N=4, for a terminal having a plurality of panel groups having a common $P_{CMAX}$ (i.e., $P_{CMAX}$ #1 for panel group #1 and $P_{CMAX}$ #2 for panel group #2), $P_{CMAX}$ for a panel group to which a i-th panel belongs may be used to report a PH for a specific i-th panel or a MPE for a specific i-th panel corresponding thereto along with a CRI/a SSBRI. A PHR MAC CE format for it, as in FIG. 10(b), may include the number of $P_{CMAX}$ that a single entry PHR MAC CE is extended as much as the number of panel groups. Here, a panel which actually backs off power for MPE mitigation may be indicated by a X field. For example, if a value of a X field is 0, panel #1 may be indicated and if a value of a X field is 1, panel #2 may be indicated. According to a value of a X field, **it may be clearly indicated that a value of a PH, $P_{CMAX}$, a MPE field included in a PHR MAC CE is reported with a correspondence to which panel.** Unlike Embodiment 1, corresponding values are reported to a single field, respectively, and if X=1, it may be clearly indicated that corresponding values are a value corresponding to panel #2. Alternatively, other than a panel indication using a X field, a panel indication is implicitly performed through a correspondence relationship between a panel and a CRI/a SSBRI (e.g., a terminal may report in advance), and it may be determined, **through a value of a CRI/SSBRI field, that PH, MPE, $P_{CMAX}$ with a correspondence to which panel are reported through a corresponding PHR MAC-CE .**

For example, for P-MPR-based PHR reporting, in FIG. 10(b), an individual (or different) maximum power parameter (e.g., a $P_{CMAX}$ parameter) may exist per panel group. In other words, G maximum power parameters may be associated with G panels, respectively. In addition, G maximum power parameters may be associated with G capability information sets, respectively.

A X field included in PHR information may indicate which one specific maximum power parameter (or panel group or capability information set) of G maximum power parameters (or panel or capability information set) is applied. Accordingly, each of N MPEs (or P-MPR values) included in corresponding PHR information corresponds to a value calculated based on the maximum power parameter indicated by a X field. In addition, each of N CRIs/SSBRIs included in corresponding PHR information may indicate a candidate beam corresponding to a corresponding panel.

Additionally or alternatively, a (one) i-th maximum power parameter among a plurality of maximum power parameters indicated by a X field may indicate a (one) i-th panel group (or i-th capability set). In this case, a PHR MAC CE may include at least one MPE for at least one panel corresponding to a i-th panel group (or a i-th capability set), and one PH for a i-th panel group (or a i-th capability set), at least one SSBRI/CRI corresponding to at least one panel corresponding to a i-th panel group (or a i-th capability set).

Additionally or alternatively, a X field indicates one specific panel among panels belonging to a panel group, and accordingly, it may be indicated that a PH, $P_{CMAX}$ and MPE value included in a PHR MAC CE correspond to the one specific panel.

Additionally or alternatively, each of a plurality of maximum power parameters (e.g., $P_{CMAX}$) included in a PHR MAC CE may be associated with at least one MPE field and each of a plurality of MPE fields may be associated with a plurality of resource fields, respectively. For example, a $P_{CMAX}$ #1 field may be associated with a MPE_1 and MPE_2 field, a MPE_1 field may be associated with a CRI/SSBRI_1 field and a MPE_2 field may be associated with a CRI/SSBRI_2 field. A $P_{CMAX}$ #2 field may be associated with a MPE_3 and MPE_4 fields, a MPE_3 field may be associated with a CRI/SSBRI_3 field and a MPE_4 field may be associated with a CRI/SSBRI_4 field. Alternatively, a $P_{CMAX}$ #1 field may be associated with a MPE_1, MPE_2 and MPE_3 field, a MPE_1 field may be associated with a CRI/SSBRI_1 field, a MPE_2 field may be associated with a CRI/SSBRI_2 field and a MPE_3 field may be associated with a CRI/SSBRI_3 field. A $P_{CMAX}$ #2 field may be associated with a MPE_4 field and a MPE_4 field may be associated with a CRI/SSBRI_4 field. A X field may indicate which of a plurality of maximum power parameters (e.g., $P_{CMAX}$) is associated with a value of one PH field.

General Device to which the Present Disclosure may be applied

FIG. 18 illustrates a block diagram of a wireless communication device according to an embodiment of the present disclosure.

In reference to FIG. 18, a first wireless device 100 and a second wireless device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a terminal in a wireless communication system, the method comprising:

   transmitting, to a network, information on a plurality of capability information sets related to uplink transmission of the terminal; and
   transmitting, to the network, power headroom report (PHR) information including information indicating specific one of the plurality of capability information sets,
   wherein the PHR information includes a plurality of maximum power parameters corresponding to the plurality of capability information sets, respectively.

2. The method of claim 1, wherein:
   a value of a power backoff indication field included in the PHR information is based on the maximum power parameter corresponding to the one specific capability information set.

3. The method of claim 1, wherein:
   information indicating specific one of the plurality of capability information sets corresponds to information indicating the maximum power parameter corresponding to the one specific capability information set.

4. The method of claim 3, wherein:
   information indicating the corresponding maximum power parameter indicates one of a same number of the plurality of maximum power parameters as the number of resource fields of the PHR information.

5. The method of claim 3, wherein:
   information indicating the corresponding maximum power parameter indicates one of a number of the plurality of maximum power parameters smaller than the number of resource fields of the PHR information.

6. The method of claim 1, wherein:

   the PHR information is a single entry PHR MAC (medium access control) CE (control element) including one power headroom (PH) field or
   the PHR information corresponds to one entry of a multi-entry PHR MAC CE including a plurality of PH fields.

7. The method of claim 1, wherein:
   the PHR information includes a plurality of power backoff indication fields corresponding to a number of the plurality of capability information sets.

8. The method of claim 1, wherein:
   the PHR information includes a plurality of resource fields corresponding to a number of the plurality of capability information sets.

9. The method of claim 8, wherein:
   the resource field includes at least one of a SSBRI (synchronization signal/physical broadcast channel resource indicator) or a CRI (channel state information-reference signal resource indicator).

10. The method of claim 1, wherein:

    the plurality of capability information sets correspond to a plurality of panels, respectively, or
    the plurality of capability information sets correspond to a plurality of panel groups, respectively.

11. A terminal in a wireless communication system, the terminal comprising:

    at least one transceiver; and
    at least one processor connected to the at least one transceiver,
    wherein the at least one processor is configured to:

    transmit, through the at least one transceiver to a network, information on a plurality of capability information sets related to uplink transmission of the terminal; and
    transmit, through the at least one transceiver to the network, power headroom report (PHR) information including information indicating specific one of the plurality of capability information sets,
    wherein the PHR information includes a plurality of maximum power parameters corresponding to the plurality of capability information sets, respectively.

12. A method performed by a base station in a wireless communication system, the method comprising:

    receiving, from the terminal, information on a plurality of capability information sets related to uplink transmission of a terminal;
    receiving, from the terminal, power headroom report (PHR) information including information indicating specific one of the plurality of capability information sets; and
    performing uplink scheduling for the terminal based on the PHR information,
    wherein the PHR information includes a plurality of maximum power parameters corresponding to the plurality of capability information sets, respectively.

13. A base station in a wireless communication system, the base station comprising:

at least one transceiver; and
at least one processor connected to the at least one transceiver,
wherein the at least one processor is configured to:

receive, through the at least one transceiver from the terminal, information on a plurality of capability information sets related to uplink transmission of a terminal;
receive, through the at least one transceiver from the terminal, power headroom report (PHR) information including information indicating specific one of the plurality of capability information sets; and
perform uplink scheduling for the terminal based on the PHR information,
wherein the PHR information includes a plurality of maximum power parameters corresponding to the plurality of capability information sets, respectively.

14. A processing apparatus configured to control a terminal in a wireless communication system, the processing apparatus comprising:

at least one processor; and
at least one computer memory operably connected to the at least one processor and storing instructions for performing a method according to any one of Claim 1 to Claim 10 based on being executed by the at least one processor.

15. At least one non-transitory computer-readable medium storing at least one instruction, wherein:
the at least one instruction executable by at least one processor controls a device in a wireless communication to perform a method according to any one of Claim 1 to Claim 10.

# FIG.1

# FIG.2

Radio Frame 10ms

Subframe 1ms

Fixed Size

0 1 2 3 4 5 6 7 8 9

Subframe ={1,2,4} Slots

Slot

0 1 2 3

Slot={7,14} Symbols

Symbol

Size depends
on subcarrier
spacing

0 1 2 3 4 5 6 7 8 9 10 11 12 13

Mini-Slot
(URLLC)

Mini-Slot={2,4,7} Symbols

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

Freq.

1ms subframe:
14 symbols/slot

12 × 15 KHz

12 × 30 KHz

PRB

12 × 60 KHz

Time

# FIG.5

FIG.6

INITIAL CELL SEARCH

PSS/SSS& [DL RS] & PBCH

S601

SYSTEM INFORMATION RECEPTION

PDCCH/ PDSCH (BCCH)

S602

RANDOM ACCESS PROCEDURE

PRACH — S603

PDCCH/ PDSCH — S604

PUSCH — S605

PDCCH/ PDSCH — S606

GENERAL DL/UL Tx/Rx

PDCCH/ PDSCH — S607

PUSCH/ PUCCH — S608

· DL/UL ACK/NACK
· UE CQI/PMI RI REPORT
  USING PUSCH AND PUCCH

# FIG.7

**(a)**

| R | R | PH (Type 1, PCell) |
|---|---|---|
| R | R | $P_{CMAX,f,c}$ |

**(b)**

| C7 | C6 | C5 | C4 | C3 | C2 | C1 | R |
|----|----|----|----|----|----|----|---|
| P | V | PH (Type 2, SpCell of the other MAC entity) | | | | | |
| R | R | $P_{CMAX,f,c}$ 1 | | | | | |
| P | V | PH (Type 1, PCell) | | | | | |
| R | R | $P_{CMAX,f,c}$ 2 | | | | | |
| P | V | PH (Type X, Serving Cell 1) | | | | | |
| R | R | $P_{CMAX,f,c}$ 3 | | | | | |
| ... | | | | | | | |
| P | V | PH (Type X, Serving Cell n) | | | | | |
| R | R | $P_{CMAX,f,c}$ m | | | | | |

**(c)**

| C7 | C6 | C5 | C4 | C3 | C2 | C1 | R |
|-----|-----|-----|-----|-----|-----|-----|-----|
| C15 | C14 | C13 | C12 | C11 | C10 | C9 | C8 |
| C23 | C22 | C21 | C20 | C19 | C18 | C17 | C16 |
| C31 | C30 | C29 | C28 | C27 | C26 | C25 | C24 |
| P | V | PH (Type 2, SpCell of the other MAC entity) | | | | | |
| R | R | $P_{CMAX,f,c}$ 1 | | | | | |
| P | V | PH (Type 1, PCell) | | | | | |
| R | R | $P_{CMAX,f,c}$ 2 | | | | | |
| P | V | PH (Type X, Serving Cell 1) | | | | | |
| R | R | $P_{CMAX,f,c}$ 3 | | | | | |
| ... | | | | | | | |
| P | V | PH (Type X, Serving Cell n) | | | | | |
| R | R | $P_{CMAX,f,c}$ m | | | | | |

**(d)**

| P | R | PH (Type 1, PCell) |
|---|---|---|
| MPE or R | | $P_{CMAX,f,c}$ |

FIG.8

| Transmit information on a plurality of capability information sets related to uplink transmission | S810 |

↓

| Transmit PHR information including information indicating specific one of a plurality of capability information sets | S820 |

FIG.9

```
┌─────────────────────────────────────────────────┐
│                Receive information on            │
│      a plurality of capability information sets   │  ⌇ S910
│           related to uplink transmission         │
└─────────────────────────────────────────────────┘
                        │
                        ▼
┌─────────────────────────────────────────────────┐
│  Receive PHR information including information indicating  │  ⌇ S920
│  specific one of a plurality of capability information sets │
└─────────────────────────────────────────────────┘
                        │
                        ▼
┌─────────────────────────────────────────────────┐
│     Perform uplink scheduling based on PHR information     │  ⌇ S930
└─────────────────────────────────────────────────┘
```

# FIG.10

FIG.10

| P | R | PH (Type 1, Pcell) |
|---|---|---|
| S | | Pcmax #1 |
| R | | Pcmax #2 |
| R | | Pcmax #3 |
| R | | Pcmax #4 |
| MPE_1 | | CRI/SSBRI_1 |
| MPE_2 | | CRI/SSBRI_2 |
| MPE_3 | | CRI/SSBRI_3 |
| MPE_4 | | CRI/SSBRI_4 |

(a)

| P | X | PH (Type 1, Pcell) |
|---|---|---|
| R | | Pcmax #1 |
| R | | Pcmax #2 |
| MPE_1 | | CRI/SSBRI_1 |
| MPE_2 | | CRI/SSBRI_2 |
| MPE_3 | | CRI/SSBRI_3 |
| MPE_4 | | CRI/SSBRI_4 |

(b)

EP 4 482 228 A1

EP 4 482 228 A1

## FIG.11

| INTERNATIONAL SEARCH REPORT | International application No. |
|---|---|
| | **PCT/KR2023/002044** |

**A. CLASSIFICATION OF SUBJECT MATTER**

**H04W 52/36**(2009.01)i

According to International Patent Classification (IPC) or to both national classification and IPC

**B. FIELDS SEARCHED**

Minimum documentation searched (classification system followed by classification symbols)

H04W 52/36(2009.01); H04L 25/02(2006.01); H04W 52/14(2009.01); H04W 72/04(2009.01); H04W 80/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 캐퍼빌리티 정보 세트(capability information set), 전력 헤드룸 보고(power headroom report, PHR), 최대 전력 파라미터(maximum power parameter), 전력 백오프 지시 필드(power backoff indication field), 패널(panel)

**C. DOCUMENTS CONSIDERED TO BE RELEVANT**

| Category* | Citation of document, with indication, where appropriate, of the relevant passages | Relevant to claim No. |
|---|---|---|
| Y | WO 2021-175178 A1 (VIVO MOBILE COMMUNICATION CO., LTD.) 10 September 2021 (2021-09-10)<br>See page 8, lines 8-14; page 12, line 20 – page 13, line 10 and page 18, lines 6-10; and claims 1 and 18. | 1-15 |
| Y | LG ELECTRONICS. Discussion on Rel-17 UE feature for NR FeMIMO. R1-2200493, 3GPP TSG RAN WG1 #107bis-e, e-Meeting. 11 January 2022.<br>See pages 1 and 8. | 1-15 |
| A | US 2020-0367180 A1 (NTT DOCOMO, INC.) 19 November 2020 (2020-11-19)<br>See paragraphs [0022]-[0093]. | 1-15 |
| A | US 2020-0221396 A1 (TELEFONAKTIEBOLAGET LM ERICSSON (PUBL)) 09 July 2020 (2020-07-09)<br>See paragraphs [0132]-[0137]. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 May 2023** | **30 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/002044**

| C. | DOCUMENTS CONSIDERED TO BE RELEVANT | |
|---|---|---|
| Category* | Citation of document, with indication, where appropriate, of the relevant passages | Relevant to claim No. |
| A | WO 2021-109392 A1 (ZTE CORPORATION) 10 June 2021 (2021-06-10)<br>    See claims 1-15. | 1-15 |

Form PCT/ISA/210 (second sheet) (July 2022)

| INTERNATIONAL SEARCH REPORT | International application No. |
|---|---|
| Information on patent family members | PCT/KR2023/002044 |

| Patent document cited in search report | | | Publication date (day/month/year) | Patent family member(s) | | | Publication date (day/month/year) |
|---|---|---|---|---|---|---|---|
| WO | 2021-175178 | A1 | 10 September 2021 | AU | 2020-431973 | A1 | 02 September 2021 |
| | | | | AU | 2021-229961 | A1 | 10 September 2021 |
| | | | | CN | 111208675 | A | 29 May 2020 |
| | | | | CN | 111208675 | B | 21 June 2022 |
| | | | | CN | 111245057 | A | 05 June 2020 |
| | | | | CN | 111245057 | B | 18 January 2022 |
| | | | | CN | 111353049 | A | 30 June 2020 |
| | | | | CN | 112511988 | A | 16 March 2021 |
| | | | | CN | 113360081 | A | 07 September 2021 |
| | | | | CN | 113363120 | A | 07 September 2021 |
| | | | | CN | 113364552 | A | 07 September 2021 |
| | | | | CN | 113364970 | A | 07 September 2021 |
| | | | | CN | 113365336 | A | 07 September 2021 |
| | | | | CN | 113365337 | A | 07 September 2021 |
| | | | | CN | 114945589 | A | 26 August 2022 |
| | | | | EP | 4102349 | A1 | 14 December 2022 |
| | | | | EP | 4102745 | A1 | 14 December 2022 |
| | | | | EP | 4102823 | A1 | 14 December 2022 |
| | | | | EP | 4112637 | A1 | 04 January 2023 |
| | | | | EP | 4113322 | A1 | 04 January 2023 |
| | | | | EP | 4117010 | A1 | 11 January 2023 |
| | | | | EP | 4117139 | A1 | 11 January 2023 |
| | | | | EP | 4117234 | A1 | 11 January 2023 |
| | | | | EP | 4117350 | A1 | 11 January 2023 |
| | | | | EP | 4117351 | A1 | 11 January 2023 |
| | | | | JP | 2021-133424 | A | 13 September 2021 |
| | | | | KR | 10-2022-0146618 | A | 01 November 2022 |
| | | | | KR | 10-2022-0149578 | A | 08 November 2022 |
| | | | | US | 2022-0308388 | A1 | 29 September 2022 |
| | | | | US | 2022-0318286 | A1 | 06 October 2022 |
| | | | | US | 2022-0394631 | A1 | 08 December 2022 |
| | | | | US | 2022-0416557 | A1 | 29 December 2022 |
| | | | | US | 2022-0416931 | A1 | 29 December 2022 |
| | | | | US | 2022-0417870 | A1 | 29 December 2022 |
| | | | | US | 2023-0004298 | A1 | 05 January 2023 |
| | | | | WO | 2021-169258 | A1 | 02 September 2021 |
| | | | | WO | 2021-169463 | A1 | 02 September 2021 |
| | | | | WO | 2021-169512 | A1 | 02 September 2021 |
| | | | | WO | 2021-169842 | A1 | 02 September 2021 |
| | | | | WO | 2021-172847 | A1 | 02 September 2021 |
| | | | | WO | 2021-174958 | A1 | 10 September 2021 |
| | | | | WO | 2021-174976 | A1 | 10 September 2021 |
| | | | | WO | 2021-175069 | A1 | 10 September 2021 |
| | | | | WO | 2021-175073 | A1 | 10 September 2021 |
| | | | | WO | 2021-175097 | A1 | 10 September 2021 |
| | | | | WO | 2021-175113 | A1 | 10 September 2021 |
| | | | | WO | 2021-175118 | A1 | 10 September 2021 |
| | | | | WO | 2021-175177 | A1 | 10 September 2021 |
| | | | | WO | 2021-175221 | A1 | 10 September 2021 |
| | | | | WO | 2021-175305 | A1 | 10 September 2021 |

Form PCT/ISA/210 (patent family annex) (July 2022)

**INTERNATIONAL SEARCH REPORT**
Information on patent family members

International application No.

**PCT/KR2023/002044**

| Patent document cited in search report | | | Publication date (day/month/year) | Patent family member(s) | | | Publication date (day/month/year) |
|---|---|---|---|---|---|---|---|
| US | 2020-0367180 | A1 | 19 November 2020 | CN | 112166629 | A | 01 January 2021 |
| | | | | EP | 3751913 | A1 | 16 December 2020 |
| | | | | EP | 3751913 | A4 | 18 August 2021 |
| | | | | JP | 7053681 | B2 | 12 April 2022 |
| | | | | WO | 2019-155636 | A1 | 15 August 2019 |
| | | | | WO | 2019-155636 | A8 | 03 December 2020 |
| US | 2020-0221396 | A1 | 09 July 2020 | EP | 3753312 | A1 | 23 December 2020 |
| | | | | EP | 3753312 | B1 | 15 September 2021 |
| | | | | US | 10893487 | B2 | 12 January 2021 |
| | | | | WO | 2019-160474 | A1 | 22 August 2019 |
| WO | 2021-109392 | A1 | 10 June 2021 | CN | 115211186 | A | 18 October 2022 |
| | | | | EP | 4082272 | A1 | 02 November 2022 |
| | | | | US | 2023-0018421 | A1 | 19 January 2023 |

Form PCT/ISA/210 (patent family annex) (July 2022)